# EUROPEAN PATENT APPLICATION

(11) **EP 4 647 056 A1**
(43) Date of publication of application: **12.11.2025**
(21) Application number: 23926488.0
(22) Date of filing: 08.03.2023
(51) Int. Cl.: A61H 1/02, B25J 9/00, B25J 9/16, H04N 7/18

(54) **WALKING TRAINING APPARATUS**

(30) Priority: 07.03.2023 KR 20230029963
(71) Applicant: P & S Robotics Co., Ltd., Seoul 07294 (KR)
(72) Inventor: PARK, Kwang Hun, Seoul 04153 (KR); LEE, Ki Hong, Seoul 07924 (KR); LEE, Kyung Hwan, Anyang-si, Gyeonggi-do 14096 (KR); KIM, Jong Hyeok, Siheung-si, Gyeonggi-do 14912 (KR)
(74) Representative: Michalski Hüttermann & Partner Patentanwälte mbB
(86) International application number: PCT/KR2023/003177
(87) International publication number: WO 2024/185913

(57) **Abstract**

The present invention relates to a walking training apparatus capable of guiding the movement of an ankle joint. The walking training apparatus may comprise: a joint movement robot which includes an ankle joint unit, and which is worn on the legs of a walking trainee; a treadmill having a movable surface layer; a pressure-measuring plate which includes a plurality of pressure sensors, and which is provided under the surface layer so as to measure the pressure by which the sole of the foot presses the surface layer; and a control unit, which receives the pressure measured by the pressure-measuring plate, so as to analyze the walking state of the walking trainee, thereby guiding the gait of the walking trainee.

## Description

### TECHNICAL FIELD

The present invention relates to a walking training apparatus, and more particularly, to a walking training apparatus capable of guiding movement of an ankle joint.

### BACKGROUND ART

In general, a walking training apparatus is an apparatus for walking training of patients with lower body paralysis or patients with abnormalities in leg joints and muscle strength. The walking training apparatus may be provided in the form of a robot that is mounted on a joint part such as a hip joint, knee joint, or ankle joint, and the robot mounted on each joint is driven at a specified angle and speed to assist joint movement of a walking trainee. The walking training apparatus may include hip, knee, and ankle joint robots or may be provided as only one robot.

The ankle joint is a joint that connects the leg and the foot and also is a joint on which most of the body's load is applied when walking. Thus, the ankle joint robot requires very large torque when rotating the ankle of the walking trainee. Here, the ankle joint robot is used to replace a function of the plantar flexor or dorsiflexor of the walking trainee when the latter's muscles are weak. Most conventional ankle joint robots are structured to operate by force of a spring or band.

These conventional ankle joint robots have structures that fix only the forefoot or rear foot of the walking trainee's foot, or fix the entire ankle joint, and thus have limitations in maintaining ankle joint balance and providing normal walking movement of the plantar flexion and dorsiflexion, and a moving path of a pressure center of ground reaction force (GRF). In addition, there was a limitation that it is difficult for the walking trainee to recognize his or her own current walking posture and a time point at which necessary movement is attempted in a walking cycle.

In addition, since the dorsiflexion force is continuously applied regardless of the walking cycle during the walking training, a natural walking pattern is not formed, and thus, there was also a problem that the walking trainee become easily tired and is difficulty to be used for a long time, and since the shoe itself is pulled by the tension of the spring or band, there was also a problem that the effectiveness of the ankle joint training is reduced because force is applied to other joints rather than the ankle joint at the end of the stance phase.

In addition, the conventional ankle joint robots are limited to use by the walking trainees with a certain level of muscle strength and a joint function, and there is a problem in that the spring force induces unnatural postures and acts as a shock in the rehabilitation of severely ill patients to put a strain on the muscles.

(Patent Document 1) Korean Patent Publication No. 10-2008-0010072

### DISCLOSURE OF THE INVENTION

### TECHNICAL PROBLEM

The present invention provides a walking training apparatus that induces natural ankle joint movement.

### TECHNICAL SOLUTION

A walking training apparatus according to an embodiment of the present invention includes: a joint movement robot including an ankle joint unit provided to correspond to an ankle joint position of a walking trainee, and worn on a leg of the walking trainee; a treadmill having a movable surface layer to provide a walking surface to the walking trainee; a pressure-measuring plate including a plurality of pressure sensors arranged so that two or more pressure sensors are disposed within an area of a sole of a foot to measure a pressure of each portion of the sole of the walking trainee, and provided at a lower portion of the surface layer to measure a pressure applied to the surface layer by the sole; and a control unit configured to receive the pressure measured by the pressure-measuring plate so as to analyze a walking state of the walking trainee, thereby guiding a gait of the walking trainee.

The control unit may be configured to analyze the walking state of the walking trainee by obtaining ground reaction force and a moving path of a pressure center according to a walking cycle of the walking trainee through a pressure of each portion of the sole of the walking trainee, which is received from the pressure-measuring plate.

The ankle joint unit may include: an ankle wear part worn on the ankle of the walking trainee; a foot fixing part fixed to the foot of the walking trainee; a joint configured to rotatably connect corresponding to the ankle joint of the walking trainee the ankle wear part to the foot fixing part each other; and a motor driving part configured to rotate the foot fixing part with respect to the ankle wear part about the joint.

The control unit may determine the walking cycle of the walking trainee to drive the motor driving part during a swing phase among a stance phase and the swing phase.

The control unit may adjust rotational power of the motor driving part according to strength of the ground reaction force.

The control unit may determine the walking cycle of the walking trainee by using the ground reaction force and the moving path of the pressure center.

The ankle joint unit may further include a stopper configured to limit a rotational motion of the foot fixing part relative to the ankle wear part.

The foot fixing part may include: a sole support part configured to support at least a portion of the sole of the foot of the walking trainee; and a band part provided in a front of the sole support part to surround a portion of the foot of the walking trainee.

The walking training apparatus may further include a walking state output unit configured to output the walking state of the walking trainee, which is analyzed by the control unit.

The walking state output unit may include a display part configured to display the ground reaction force and the moving path of the pressure center obtained from the control unit.

The walking training apparatus may further include a camera unit configured to photograph a walking posture of the walking trainee walking on the treadmill, wherein the control unit may determine the walking cycle of the walking trainee through an image photographed by the camera unit.

The display part may further display an image photographed by the camera unit.

The walking training apparatus may further include a joint movement measuring unit configured to measure an angle and torque of each joint of the walking trainee, wherein the display part may further display the angle and torque of each joint, which are measured by the joint movement measuring unit.

The control unit may determine the walking cycle of the trainee through the angle and torque of each joint.

The walking state output unit may further include a notification part configured to output sound or light at a specific time point in the walking cycle of the walking trainee.

The notification part may output the sound or light at an end point of the stance phase or a start point of the swing phase.

The motor driving part may vertically rotate the foot fixing part with respect to the ankle wear part, and the ankle joint unit may further include a horizontal rotation part for horizontally rotating the foot fixing part with respect to the ankle wear part.

The control unit may guide the gait of the walking trainee while matching the walking state of the walking trainee to a set walking pattern.

### ADVANTAGEOUS EFFECTS

The walking training apparatus according to the embodiment of the present invention may analyze the walking state of the walking trainee by receiving the pressure that is pressed to the surface layer of a treadmill by the walking trainee, which is measured on the pressure-measuring plate, to guide the walking (or walking movement) of the walking trainee, thereby inducing the maintenance of the balance of the ankle joint and the natural movement of the plantar flexion and dorsiflexion according to the walking cycle of the walking trainee.

In addition, the walking state output unit may receive the visual and/or auditory feedback on the walking state of the walking trainee according to the walking cycle of the walking trainee to recognize the current walking state (e.g., walking posture) and attempt the movements that is necessary to correct the walking state according to each walking cycle.

In addition, the walking trainee may set the acceptable walking pattern (or walking condition) and provide the movement according to the maintenance in balance of the ankle joint and the walking cycle of the plantar flexion and dorsiflexion along the moving path of the pressure center of the natural ground reaction force (GRF) within the safe range.

Therefore, the walking trainees may actively learn the natural gait.

### BRIEF DESCRIPTION OF THE DRAWINGS

FIG. 1 is a perspective view of a walking training apparatus according to an embodiment of the present invention.
FIG. 2 is a side view of a joint movement robot according to an embodiment of the present invention.
FIG. 3 is a conceptual view for explaining a walking cycle according to an embodiment of the present invention.
FIG. 4 is a side view illustrating a dorsiflexion and a plantar flexion of a swing phase according to an embodiment of the present invention.
FIG. 5 is a schematic view illustrating an example of displaying of a display part according to an embodiment of the present invention.
FIG. 6 is a bottom view illustrating a horizontal rotation part of an ankle joint unit according to an embodiment of the present invention.

### MODE FOR CARRYING OUT THE INVENTION

Hereinafter, specific embodiments will be described in more detail with reference to the accompanying drawings. The present disclosure may, however, be embodied in different forms and should not be construed as limited to the embodiments set forth herein. Rather, these embodiments are provided so that this invention will be thorough and complete, and will fully convey the scope of the present disclosure to those skilled in the art. In the descriptions, the same elements are denoted with the same reference numerals. In the figures, the dimensions of layers and regions are exaggerated for clarity of illustration. Like reference numerals refer to like elements throughout.

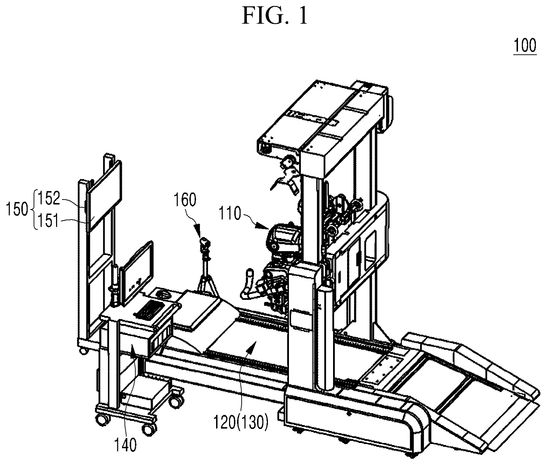

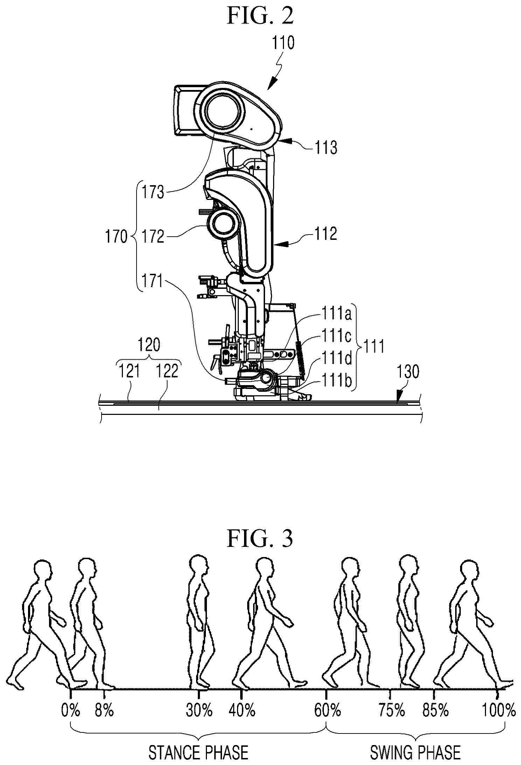

FIG. 1 is a perspective view of a walking training apparatus according to an embodiment of the present invention, and FIG. 2 is a side view of a joint movement robot according to an embodiment of the present invention.

Referring to FIGS. 1 and 2, a walking training apparatus 100 according to an embodiment of the present invention may include: a joint movement robot 110 that includes an ankle joint unit 111 provided to correspond to an ankle joint position of a walking trainee, and is worn on a leg of the walking trainee; a treadmill 120 having a movable surface layer 121 to provide a walking surface to the walking trainee; a pressure-measuring plate 130 that includes a plurality of pressure sensors arranged so that two or more pressure sensors are disposed within an area of a sole of a foot to measure a pressure of each portion of the sole of the walking trainee, and provided at a lower portion of the surface layer 121 to measure a pressure applied to the surface layer 121 by the sole; and a control unit that receives the pressure measured by the pressure-measuring plate 130 to analyze a walking state of the walking trainee, thereby guiding a gait of the walking trainee.

The joint movement robot 110 may be worn on the leg of the walking trainee to assist walking training of the walking trainee(s) that include(s) patients with impaired nerve functions such as stroke or Parkinson's disease, patients with unbalanced muscle development, patients with lower body paralysis, or patients with abnormalities in leg joints and muscle strength.

Here, the joint movement robot 110 may basically include the ankle joint unit 111 provided to correspond to the ankle joint of the walking trainee. The ankle joint unit 111 may be provided to correspond to an ankle joint position (or ankle area) of the walking trainee and may operate an ankle joint of the walking trainee, and also may have a structure in which the ankle joint of the walking trainee maintains a balance along a moving path of a pressure center according to a walking cycle under its own body weight conditions or which induces plantar flexion and dorsiflexion. For example, the ankle joint unit 111 may provide a frame to maintain a posture with high muscle tension in plantar flexion and dorsiflexion, adduction and abduction, and inversion and eversion of the ankle joint in a correct posture suitable for walking. In particular, the ankle joint unit 111 may provide a structure that assists rotational force generated in plantar flexion and dorsiflexion movement with a spring, thereby assisting an output of a motor and making its size to be compact and lightweight.

The ankle joint unit 111 may effectively provide ankle movement of the walking trainee, minimize torque required for the ankle movement of the walking trainee, and prevent strain on the ankle of the walking trainee during the walking training using the joint movement robot 110.

In addition, the joint movement robot 110 may further include a hip joint part 113 provided to correspond to the hip joint of the walking trainee, and a knee joint part 112 provided to correspond to the knee joint of the walking trainee, in addition to the ankle joint unit 111. The hip joint part 113 may be provided to correspond to the hip joint position of the walking trainee and may also operate the hip joint of the walking trainee. For example, the hip joint part 113 may be coupled to an upper portion of the knee joint part 112, and may be coupled to the leg (i.e., the hip joint portion) of the walking trainee by surrounding the hip joint portion of the walking trainee and may include a leg fixing member so that a portion of the leg (e.g., the hip joint portion) of the walking trainee is received, and the received portion of the leg (e.g., the hip joint portion) is fixed by a belt. In addition, the hip joint part 113 may provide a frame to maintain the hip joint of the walking trainee in a correct posture by externally rotating and/or internally rotating the hip joint through flexion and extension of the hip joint.

The knee joint part 112 may be provided to correspond to the knee joint of the walking trainee and may also operate the knee joint of the walking trainee. For example, the knee joint part 112 may be coupled to an upper portion of the ankle joint unit 111 and may be coupled to the leg (i.e., the knee joint part) of the walking trainee by surrounding the knee joint portion of the walking trainee, and the knee joint part 112 may also include the leg fixing member and fix the received leg portion (e.g., the knee joint portion) with the belt in a state in which a portion of the leg (e.g., the knee joint portion) of the walking trainee is received. In addition, the knee joint part 112 may provide a frame to maintain the knee joint hyperextended through the flexion and extension of the knee joint in a correct posture while walking.

Here, the joint movement robot 110 may have a structure that is capable of adjusting a length of a segment disposed between joints of the walking trainee and a position of a fixing part in three dimensions, and may adjust an unstable pelvis and upper body to a desired position in three-dimensional space to maintain a posture suitable for the walking, and may adjust a posture suitable for each stage in various training of the walking trainee. In addition, the fixing position and posture of the frame may be adjusted in consideration of the bending or contraction of the body of the walking trainee.

In order for the body weight of the walking trainee to be properly transferred to the soles of the feet to obtain ground reaction force (GRF), the force has to be transferred to the hip joint, the knee joint, and the ankle joint without collapse. If the ankle joint(s) of the walking trainee(s) is(are) not be maintained in the correct walking posture during the walking training, the ground reaction force effect transferred from the body weight will not be obtained, and abnormal walking habits may be learned. In addition, if only the hip joint movement is provided, a range of the motion and movement of the knee and ankle joints may be insufficient or unnaturally limited, and if only the ankle joint movement is provided, a range of motion and movement of the hip and knee joints may be insufficient or unnaturally limited, but all the three joints (i.e., hip, knee, and ankle joints) may be controlled to obtain a wide range of a motion exercise effect of normal walking pattern including accurate ground reaction force.

The treadmill 120 may have the movable surface layer 121 to provide a walking surface for the walking trainee and may provide a walking surface (or bottom surface) that moves at a specified speed so that the walking trainee continue walking training in a fixed position (or in place). The surface layer 121 may be movable to provide the moving walking surface and may be subject to a pressure by the sole of the walking trainee's foot. For example, the surface layer 121 may be provided as a belt and may be rotated by a roller or the like. Here, the treadmill 120 rotates the roller at a constant speed to move the surface layer 121, and thus, the walking trainee may walk on the surface layer 121 as if walking on flat ground, and the walking trainee may walk on the treadmill 120 so that continuous walking is achieved at one point. Here, the treadmill 120 may be driven at a speed corresponding to the walking speed of the walking trainee who is training while wearing the joint movement robot 110.

The treadmill 120 may further include a support plate 122 or fixed plate that is fixed in position to supports the surface layer 121, and the surface layer 121 may move along a circumference of the support plate 122.

The pressure-measuring plate 130 may be provided at a lower portion of the surface layer 121 to measure a pressure exerted by the sole of the walking trainee on the surface layer 121 and may measure a pressure of each portion of the sole of the walking trainee. For example, the pressure-measuring plate 130 may be disposed between the support plate 122 and the surface layer 121 and supported by the support plate 122 and may detect (or measure) force (or a pressure) applied to the surface layer 121.

Here, the pressure-measuring plate 130 may include a plurality of pressure sensors (not shown) arranged in at least one of a longitudinal or width direction of the surface layer 121. The plurality of pressure sensors (not shown) may be arranged in at least one of the longitudinal or width direction of the surface layer 121, and two or more sensors may be disposed within an area of the sole of the foot to measure the pressure of each portion of the sole of the walking trainee.

The control unit 140 may receive the pressure measured from the pressure-measuring plate 130 to analyze a walking state of the walking trainee, thereby guiding the walking (or walking movement) of the walking trainee. In addition, the control unit may analyze the walking state of the walking trainee according to the pressure received from the pressure-measuring plate 130 and may control a driving state of the joint movement robot 110.

The walking training apparatus 100 according to the present invention may further include a walking state output unit 150 that outputs the walking state of the walking trainee analyzed by the control unit 140.

The walking state output unit 150 may output the walking state of the walking trainee analyzed by the control unit 140 and may display the walking state of the walking trainee in the form of a number, graph, or image, or may notify the walking state with a sound such as a single tone.

In addition, the control unit 140 may analyze the walking state of the walking trainee by obtaining the ground reaction force and the moving path of the pressure center according to the walking cycle of the walking trainee through the pressure of each portion of the sole of the walking trainee received from the pressure-measuring plate 130. The control unit 140 may obtain (or calculate) the ground reaction force and the moving path of the pressure center according to the walking cycle of the walking trainee by using the pressure of each portion of the sole of the walking trainee measured by the pressure-measuring plate 130 according to the walking cycle of the walking trainee and may analyze the walking state of the walking trainee. Here, the control unit 140 may analyze the walking state of the walking trainee, determine which point in the walking cycle the current point in time corresponds thereto, and determine whether the walking trainee has the correct walking posture at each point in the walking cycle.

Here, the ankle joint unit 111 may include: an ankle wear part 111a worn on the ankle of the walking trainee; a foot fixing part 111b fixed to the foot of the walking trainee; a joint 111c that rotatably connects corresponding to the ankle joint of the walking trainee the ankle wear part 111a and the foot fixing part 111b each other; and a motor driving part 111d that rotates the foot fixing part 111b with respect to the ankle wear part 111a about the joint 111c. The ankle wear part 111a may be worn on the ankle of the walking trainee and may fix the leg of the walking trainee. For example, the ankle wear part 111a may have a form that secures a portion of the leg (e.g., ankle) of the walking trainee with a belt in a state in which the leg is received, and the ankle joint unit 111 may be fixed to the ankle (or leg) of the walking trainee through the ankle wear part 111a, and thus, the ankle joint unit 111 may be stably worn on the walking trainee.

The foot fixing part 111b may be fixed to the foot of the walking trainee, fix the foot of the walking trainee, and rotate with respect to the ankle wear part 111a by using the joint 111c as a center.

The joint 111c may rotatably connect corresponding to the ankle joint of the walking trainee the ankle wear part 111a and the foot fixing part 111b each other, and also may connect the ankle wear part 111a and the foot fixing part 111b and may be provided corresponding to the ankle joint of the walking trainee. Here, the joint 111c may act as a joint of the ankle joint unit 111 so that the foot fixing part 111b rotates relative to the ankle wear part 111a.

The motor driving part 111d may provide rotational power centered on the joint 111c and may rotate the foot fixing part 111b with respect to the ankle wear part 111a centered on the joint 111c. For example, the motor driving part 111d may rotate the foot fixing part 111b relative to the ankle wear part 111a in at least a medial-lateral (ML) axis direction among three axes of the medial-lateral (dorsal/plantar), vertical (vertical) axis (abduction/adduction), and anterior-posterior axis (eversion/inversion), and may also rotate in the vertical axis and/or anteroposterior (AP) axis direction. Here, the motor driving part 111d may be designed in various forms by using various link combinations with a driving source such as a motor or a hydraulic/pneumatic actuator, and the specific design form may be freely changed by a person skilled in the art.

The motor driving part 111d may rotate the shaft to wind and unwind a rope around the shaft and may also allow an end of the foot fixing part 111b to ascend and descend by connecting one end of the rope to the end of the foot fixing part 111b and winding and unwinding the rope. As a result, the foot fixing part 111b may rotate relative to the ankle wear part 111a by using the joint 111c as the center, and when the rope is wound, the end of the foot fixing part 111b may ascend so that the foot fixing part 111b rotates upward relative to the ankle wear part 111a by using the joint 111c as the center, and when the rope is unwound, the end of the foot fixing part 111b may descend so that the foot fixing part 111b rotates downward relative to the ankle wear part 111a by using the joint 111c as the center. Here, the movement of rotating the foot fixing part 111b downward may be performed by disposing the motor driving part 111d in a no-load state and slipping the rotation shaft of the motor of the motor driving part 111d so that the foot of the walking trainee rotates downward by its own weight, and the rotational power of the motor driving part 111d is controlled according to an amount of ankle joint movement of the walking trainee, and thus, the ankle joint movement of the walking trainee may be performed naturally, and an effect of rehabilitation training may increase. In addition, tension according to fixed position adjustment of the spring connected to the end of the foot fixing part 111b may be adjusted to assist rotational power of the motor driving part 111d.

That is, the end of the foot fixing part 111b may ascend and descend through the motor driving part 111d to assist the ankle movement of the walking trainee, the walking trainee may perform the ankle movement as the rehabilitation training for the walking trainee, and the ankle movement of the walking trainee may also be provided during the walking training of the walking trainee.

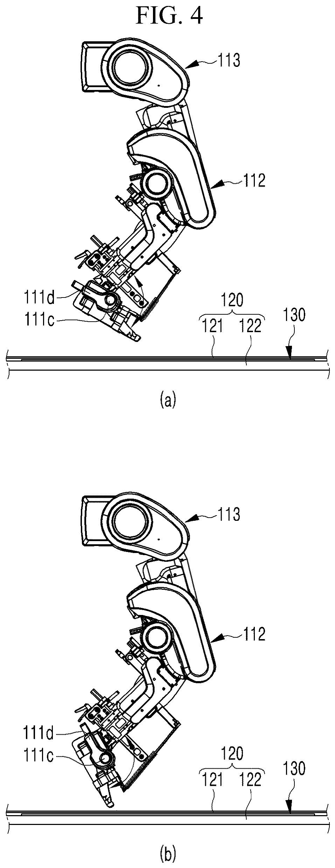

FIG. 3 is a conceptual view for explaining a walking cycle according to an embodiment of the present invention, FIG. 4 is a side view illustrating dorsiflexion and plantar flexion of a swing phase according to an embodiment of the present invention, (a) of FIG. 4 is a view illustrating the dorsiflexion of the swing phase, and (b) of FIG. 4 is a view illustrating the plantar flexion of the swing phase.

Referring to FIGS. 3 and 4, the control unit 140 may determine the walking cycle of the walking trainee to drive the motor driving part 111d during the swing phase among the stance phase and the swing phase.

The human walking cycle may be divided into the stance phase and the swing phase. The stance phase may be divided into heel contact (0%, 100%), foot flat (8%), mid stance (30%), heel off (40%), and toe off (60%), and the swing phase may be divided into early swing (60% to 75%), mid swing (75% to 85%), and late swing (85% to 100%) operations.

A primary function of the ankle joint, which is responsible for the movement of the foot in walking kinematics, is to absorb a shock of heel strike during the stance phase and to be flexible to the plantar flexion and dorsiflexion, thereby providing forward movement of the body.

As illustrated in FIG. 3, a period from the moment the heel touches the ground to the moment the tip of the toe leaves the ground is called the stance phase (0% to 60%), and a period during which the foot is off the ground is called the swing phase (60% to 100%). When walking at an average speed, approximately 10° of dorsiflexion movement and approximately 20° of plantar flexion movement are required at the ankle joint, and although an angle of the plantar flexion is greater than an angle of the dorsiflexion, the movement in the direction of dorsiflexion accounts for approximately 80% of the entire walking cycle, and during the movement of the ankle joint, the dorsiflexion contributes greatly to walking.

During the swing phase, a functional lower extremity length (or leg length) is shortened by maintaining the dorsiflexed state to prevent the tips of the toes from touching the ground, thereby allowing a natural swing motion. However, in the case of patients, there are many cases in which the function of the ankle joint performing the dorsiflexion and/or the plantar flexion is reduced and contracted accordingly, and the ankle joint unit 111 of the joint movement robot 110 may support an ankle joint training function to provide a complete ground-touching walking training function, and the joint movement robot 110 may be designed with an anthropomorphic operating mechanism to provide a synchronized walking training function of the hip joint, the knee joint, and the ankle joint.

That is, the control unit 140 may perform the function of preventing the foot from dragging when the walking trainee walks by driving the motor driving part 111d in the swing phase to forcibly rotate the foot fixing part 111b with respect to the ankle wear part 111a around the joint 111c. Here, the control unit 140 may analyze the walking state of the walking trainee to determine the walking cycle of the walking trainee, determine which cycle the current cycle is between the stance phase and the swing phase, and drive the motor driving part 111d to forcibly rotate the foot fixing part 111b relative to the ankle wear part 111a around the joint 111c if the current cycle is the swing phase.

For example, the motor driving part 111d of the ankle joint unit 111 may recognize the swing phase of the stance phase and the swing phase in the walking cycle and perform the movement (or rotation) of the foot fixing part 111b relative to the ankle wear part 111a centered on the joint 111c. Here, prior to the configuration of the motor driving part 111d, a tilted degree of freedom of the complex ankle joint may be simplified to 1 degree of freedom on a sagittal plane, and due to the configuration of 1 degree of freedom on the sagittal plane, a rod end bearing may be configured on the shaft of a medial (inner) portion of the foot to ensure safety of the walking trainee and stabilization of the joint movement robot 110 for a first time, thereby configuring 1 degree of freedom capable of three-dimensional rotation. A configuring the inner sole may be simplified with the load end bearing, the mechanical configuration may be minimized on the inside between the two feet, and walking may be made possible without interference or collision between the two feet at a minimum width by using a cross roller bearing (CRB), which is a special bearing, on an outer sole (outside of the foot) that is consistent with the axis of the inner sole, and thus, smooth rotation may be made possible while maintaining rigidity in three-axis force so that the walking trainee walks naturally.

Here, the motor driving part 111d may perform a first deceleration of 32.8:1 through the motor and the reducer, and a second deceleration of 8:1 may be performed by using a lever principle using a moment arm of an end of the rope and a rope roller coupled to a reducer output shaft, so that a final deceleration of 262.4:1 is implemented in a small ankle joint space. Secondary reduction may be used through the lever principle at a small primary reduction ratio to determine a final reduction ratio, thereby minimizing a load on the reducer itself. Due to this structure, an external load that may occur on the ankle joint of the walking trainee during the walking may be minimized, resulting in increasing in effectiveness of the walking training. In addition, the walking trainee, who is capable of cognitive and active training by using a flexible rope in the structure of the lever, can comfortably move the ankle joint and walk according to his/her walking state in the swing phase, thereby minimizing training fatigue of the walking trainee and increasing in satisfaction with the walking training.

In addition, the control unit 140 may adjust the rotational power of the motor driving part 111d according to the strength of the ground reaction force. For example, the control unit 140 may adjust the rotational power of the motor driving part 111d in inverse proportion to the strength of the ground reaction force. In general, when the ground reaction force is large, the power of the walking trainee to provide the dorsiflexion by itself may also be large, and thus, the rotational power of the motor driving part 111d may be reduced, and when the ground reaction force is small, the power of the walking trainee to provide the dorsiflexion by itself may also be weak, and thus, the rotational power of the motor driving part 111d may increase to effectively allow the walking trainee's feet to be flexed.

Here, the control unit 140 may determine the walking cycle of the walking trainee by using the ground reaction force and the moving path of the pressure center. According to the walking cycle, the ground reaction force and the moving path of the pressure center may change (linearly), and each characteristic(s) of the ground reaction force and the moving path of the pressure center may appear at each time point in the walking cycle. Based on this feature, the walking cycle of the walking trainee may be determined according to each feature (or location) by using the ground reaction force obtained by the pressure measured by the pressure-measuring plate 130 and the moving path of the pressure center. As a result, the movement of the ankle joint may be provided according to each time point in the walking cycle of the walking trainee.

In addition, the ankle joint unit 111 may further include a stopper that limits a rotational motion of the foot fixing part 111b relative to the ankle wear part 111a. The stopper may limit the rotational motion of the foot fixing member 111b relative to the ankle wear part 111a, and a rotational angular range of the ankle joint is limited by the stopper within an angle required for a walking pattern (e.g., a starting point of the walking cycle) to primarily prevent foot dragging when walking with a customized walking pattern, thereby preventing injury to the ankle joint of the walking trainee, and may also compensate for the support required for the ankle joint in a toe-off section, which is an end (or final point) of the stance phase.

For example, the stopper may be applied with a technology that limits the rotational angle range of the ankle joint within the angle required for the walking pattern, and due to the application of this technology, it may primarily play a role in preventing ankle joint injuries caused by the dragging of the walking trainee's feet during the walking, and in the toe-off section at the end of the stance phase, when the ankle joint is in dorsiflexion, the stopper may be used to compensate for the supporting force instead of the driving torque required for the ankle joint.

The walking training apparatus 100 of the present invention may further include a load compensation unit (e.g., a dynamic load system) that reduces a body weight load of the walking trainee and assists in pulling the load according to the walking pattern. The load compensation unit may upwardly support the entire body of the walking trainee with a designated traction amount, and the load compensation unit may include a harness connected to the body of the walking trainee, a harness driving device having a driving means for adjusting a vertical length of the harness, a dynamic compensation unit that compensates for a reverse load that varies according to a vertical displacement in the walking cycle, and a load cell that detects a real-time traction load.

The load compensation unit may compensate for the support force required for the ankle joint in the toe-off section, and in the absence of the load compensation unit, the motor driving part 111d of at least 500 W based on a body weight of 100 kgf may be required, and the toe-off support force may allow the foot of the walking trainee to dorsiflex during the swing phase, and thus, the configuration of the motor driving part 111d may be simplified, and accordingly, the walking training efficiency of the walking trainee may be improved. That is, in the absence of the load compensation unit (and/or the stopper) that compensates for the supporting force required during the toe-off, the motor driving part 111d of at least 500 W based on a body weight of 100 kgf may be required, and when performing the walking training by applying the load compensation unit, it may be possible to configure the motor driving part 111d with a simple structure that compensates for the primary supporting force in the toe-off section and, secondarily, may not cause the walking trainee to stumble. Due to this structure, the ankle joint unit 111 of the joint movement robot 110 may be relatively simplified, and the walking training efficiency of the walking trainee may be improved.

Here, the stopper may limit a rotation angle of the foot fixing part 111b and may limit the rotation when the foot fixing part 111b rotates, and the limited rotation range may preferably be -12° to 12°.

The foot fixing part 111b may include: a sole support part that supports at least a portion of the sole of the foot of the walking trainee; and a band part that is provided in a front of the sole support part to surround a portion of the foot of the walking trainee. The sole support part may support at least a portion (e.g., the heel) of the sole of the foot of the walking trainee and may allow the sole of the foot (i.e., the toes and the heel) of the walking trainee to be in balance. Here, the sole support part may adjust its height according to a physical condition of the walking trainee (e.g., height, foot size, etc.) or a height of the toe fixed to the band part to achieve balance between the toe portion and the heel portion and may also move horizontally together with the band part to ensure that the sole of the walking trainee's foot is stably supported while achieving the balance together with the band part. If the band part is fixed only to the toe portion, the toe portion and the heel portion may not be in balance to cause inconvenience in walking of the walking trainee. Thus, the sole support part may eliminate the discomfort caused by the sole of the walking trainee due to unbalance by allowing the sole of the walking trainee to be in balance.

In addition, if the band part is fixed only to the toe portion, when the ankle joint unit 111 is in air, the foot of the walking trainee is not stably supported by the ankle joint unit 111, and when the walking trainee performs the walking training, the heel is not supported, and thus, when the foot of the walking trainee is in the air, the toe portion of the walking trainee ascends, and the heel portion descends, and accordingly, the ankle of the walking trainee does not rotate stably, and the ankle joint of the walking trainee is strained. However, even when the ankle joint unit 111 is disposed in the air for walking, the sole support part may support at least a portion (e.g., the heel) of the sole of the walking trainee's foot so that the walking trainee's foot is stably supported on the ankle joint unit 111. In addition, the sole support part may prevent the heel portion of the foot from descending as the toe portion of the walking trainee fixed by the band part ascends when the ankle joint unit 111 mounted on the foot of the walking trainee for walking is in the air, thereby enabling the ankle of the walking trainee to rotate stably and preventing the ankle joint of the walking trainee from being strained.

The band part may be provided in the front of the sole support part and may surround a portion (e.g., the toes) of the foot of the walking trainee. The band part can wrap around the instep and sole of the foot of the walking trainee and may secure the foot of the walking trainee by wrapping around the instep and sole of the foot. For example, the band part may be configured in the form of a band, and a fixing member may be connected to one end of the band shape and fixed (or attached) to a surface of another portion, thereby wrapping around the instep and sole of the walking trainee's foot to fix the walking trainee's foot. An anti-slip part may be formed on at least a portion of the surface of the band part, and the anti-slip part may be formed on a portion of the surface of the band part that touches the sole of the foot of the walking trainee and/or a portion of the surface of the band part that touches the ground. If the anti-slip part is formed on a portion of the surface of the band part that touches the sole of the foot of the walking trainee, the walking trainee's foot may be prevented from slipping on the band part during the walking training of the walking trainee, and if the anti-slip part is formed on a portion of the surface of the band part that touches the ground, the walking trainee's foot may be prevented from slipping together with the band part during the walking training of the walking trainee.

The structure of the foot fixing part 111b that binds the foot to the ankle joint unit 111 of the walking trainee applies a strap structure of a basic two-point support manner through the foot sole support part and the band part. In the case of general patients, problems of pronation, supination, and tiptoe walking generally occur due to muscle building and a lack of training.

The conventional (or common) walking training apparatus is structured to pull the feet from both sides using a spring or an elastic body and is focused on dealing with the problem of foot drag during the walking training rather than adjusting the shape of the foot to suit the walking training.

Thus, there is a limit to practical training through the exact ground reaction force, and in the present invention, a strap manner for wrapping the entire shoe of the walking trainee around the ankle joint unit 111 may be implemented by improving the conventional structure (or existing structure). The two-point support manner may be applied to fix midfoot/forefoot and a lower leg (ankle) of the ankle joint using the implemented strap, and the problems of the foot pronation and the supination and the toe walking may be solved by using the strap structure, and thus, the walking may be performed according to a patient-tailored walking pattern that is closest to normal walking, thereby improving walking efficiency.

Particularly, the strap may be designed to wrap around the entire shoe of the walking trainee, and the midfoot/forefoot portion may be adjusted by using a combination of the manners for adjusting and changing a size, thickness, and arrangement of the front strap and the instep pad to fit the foot of the walking trainee, thereby adjusting the pronation and the supination of the foot and the shape of the toe. In this state, a back strap and a side strap may be used to completely wrap the shoe, and if an ankle velcro is combined in this state, the two-point support may be firmly established to enable effective walking training.

A distance of the band part from the sole support part may be adjusted, and thus, the foot fixing part 111b may be applied to all the walking trainees wearing the ankle joint unit 111 without the inconvenience of having to make the foot fixing part 111b individually according to the foot (or foot length) of the walking trainee to fix the toe portion (e.g., metatarsal bone behind the toe) of the walking trainee to the band part.

In addition, the foot fixing part 111b may further include an instep pad provided between the instep of the walking trainee and the band part to fill in a clearance. The instep pad may be provided between the instep of the walking trainee and the band part and may be provided in the clearance (or space between the surface of the band part and the instep of the walking trainee). For example, depending on the foot size (or width, thickness, etc., of the foot) of the walking trainee, the clearance may be generated between the surface of the band part and the instep of the walking trainee, and the instep pad may be provided according to the foot size of the walking trainee to fill the clearance, thereby firmly fixing the foot of the walking trainee regardless of the foot size of the walking trainee, and ensuring that the foot of the walking trainee is stably fixed. Furthermore, the instep pad may provide a cushion to the foot of the walking trainee to reduce a pressure and/or pain on the foot of the walking trainee when the band part is tightened to firmly fix the foot of the walking trainee.

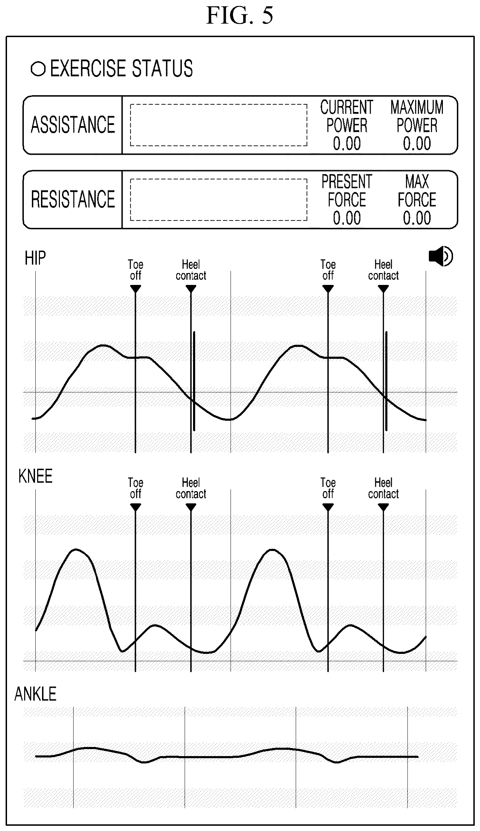

FIG. 5 is a schematic view illustrating an example of displaying of a display part according to an embodiment of the present invention.

Referring to FIG. 5, the walking state output unit 150 may include a display part 151 that displays the ground reaction force and the moving path of the pressure center obtained from the control unit 140. The display part 151 may display the ground reaction force and the moving path of the pressure center obtained from the control unit 140, display information (e.g., the pressure) received from the pressure-measuring plate 130 or the like in the form of numbers or graphs, and display the progress of walking in the forward or reverse direction of the joint movement robot 110, the hip joint angle and force, the knee joint angle and force, the ankle joint angle and force, and the current time point during the walking cycle in real time. Here, the display part 151 may display in real time the ground reaction force and the moving path of the pressure center obtained from the control unit 140. The display part 151 may be used to train the walking trainee so as to detect and correct abnormalities in walking on his/her own by displaying the information to the walking trainee. For this, the numerical results may be graphically displayed in front of the walking trainee.

The walking training apparatus 100 according to the present invention may further include a camera unit 160 that photographs a walking posture of the walking trainee walking on the treadmill 120.

The camera unit 160 may photograph the walking posture of the walking trainee walking on the treadmill 120 and may have a structure that allows an operator to detect the training posture of the walking trainee in the walking cycle as desired, such as a long-distance photographing position that shows a front surface, a side surface, and overall surfaces, and a close-distance photographing position that shows detailed joint movements.

For example, the camera unit 160 may use a camera that includes a detection means such as infrared rays and may be installed to be adjacent to the treadmill 120 so as to detect the movements of the walking trainee walking on the treadmill 120. The camera may be installed in one or more than two, and the arrangement and number of the cameras may vary depending on usage environments and the conditions of the walking trainee.

Here, the control unit 140 may determine the walking cycle of the walking trainee through an image photographed by the camera unit 160. Since the movement of the walking trainee walking on the treadmill 120 may be detected through the image photographed by the camera unit 160, the control unit 140 may determine the walking cycle of the walking trainee based on the walking posture of the walking trainee in the image and may know which walking posture of the walking trainee at which point in the walking cycle the current walking posture is close.

The display part 151 may further display the image photographed by the camera unit 160. For example, the display part 151 may receive data (e.g., the image) on the (walking) movement of the walking trainee through the camera unit 160 and display the image (in real time) to the walking trainee so that the trainer detects and corrects abnormalities in walking on his/her own. For this, the display part 151 may further display an image photographed by the camera unit 160 and may show the numerical results graphically in front of the walking trainee.

The walking training apparatus 100 according to the present invention may further include a joint movement measuring unit 170 that measures an angle and torque of each joint of the walking trainee.

The joint movement measuring unit 170 may measure the angle and torque of each joint of the walking trainee, and joint measuring parts 171, 172, and 173 may be provided for each joint. Here, the joint movement measuring unit 170 may include an ankle joint measuring part 171 that measures an angle and torque of the ankle joint of the walking trainee, a knee joint measuring part 172 that measures an angle and torque of the knee joint of the walking trainee, and a hip joint measuring part 173 that measures an angle and torque of the hip joint of the walking trainee. For example, each of the ankle joint measuring part 171, the knee joint measuring part 172, and the hip joint measuring part 173 may use an electric goniometer, and the electric goniometer may include a flexible bar made of a flexible material so as to be bent together with the joint, and an attachment support connected to a portion of the lower extremity (or leg) and the flexible bar so that the flexible bar is bent together with the joint. The attachment support of the electric goniometer may be attached to upper and lower portions of the joint to be measured and connected to the flexible bar disposed in the same direction as the joint to be measured.

In addition, each of the ankle joint measuring part 171, the knee joint measuring part 172, and the hip joint measuring part 173 may use a variable resistance goniometer, and the variable resistance goniometer may include a variable resistor of which a resistance value is changed according to the angle of the joint and an attachment support that fixes the variable resistor to the lower limb. The attachment support may be disposed at the upper and lower portions of the joint, like the attachment support of the electric goniometer, and the variable resistor provided in the variable resistance goniometer may be formed so that a resistance control part that changes the resistance value moves together with the joint, and thus, the resistance value of the variable resistor may be changed as the angle of the joint is changed so that the angle of the joint is measured through the resistance value that is changed according to the angle of the joint.

In addition, the display part 151 may further display the angle and torque of each joint, which are measured by the joint movement measuring unit 170. For example, the display part 151 may receive data (e.g., the image) on the (walking) movement of the walking trainee through the joint movement measuring unit 170 and display the image (in real time) to the walking trainee so that the trainer detects and corrects the abnormalities in walking on his/her own. For this, the display part 151 may further display the angle and torque of each joint, which are measured by the joint movement measuring unit 170, and may show the numerical results in a diagrammatic form in front of the walking trainee.

Here, the control unit 140 may determine the walking cycle of the walking trainee through the angle and torque of each joint. Since the angle and torque of each joint are changed at each time point in the walking cycle, the motion of the walking trainee walking on the treadmill 120 may be detected through the angle and torque of each joint, which are measured by the joint movement measuring unit 170, and the control unit 140 may determine the walking cycle of the walking trainee based on the walking posture of the walking trainee analyzed (or calculated) through the angle and torque of each joint, and may know which walking posture of the walking trainee is close to that at which point in the walking cycle.

The walking state output unit 150 may further include a notification part 152 that outputs sound or light at a specific time point in the walking cycle of the walking trainee. The notification part 152 may output the sound or light at a specific time point in the walking cycle of the walking trainee and may output sound or light such as single sound that is recognized by the walking trainee at a specific time point designated during the walking cycle of the walking trainee. As a result, the walking trainee may recognize at what point in the walking cycle the walking trainee is, and may detect and correct abnormalities in walking on his/her own.

Here, the notification part 152 may output sound or light at an end point of the stance phase or a start point of the swing phase. As a result, the walking trainee may prevent foot dragging by recognizing and attempting the dorsiflexion of the ankle joint.

In addition, the walking trainee may increase in ground reaction force by attempting the plantar flexion at a push-off time point of the walking cycle. For example, the sound or light may be output at the push off of the plantar flexion corresponding to 40% to 60% in FIG. 3, and thus, the walking trainee may attempt the plantar flexion, and the walking trainee may increase in power of the plantar flexion by itself so that the ground reaction force increases. As a result, the ground reaction force of the walking trainee by itself may increase, and the power that the walking trainee by itself provides for the dorsiflexion (or the power that enables the dorsiflexion) may increase.

Here, the end point of the stance phase may correspond to 40% to 60% in FIG. 3, and the start point of the swing phase may correspond to 60% to 75% in FIG. 3.

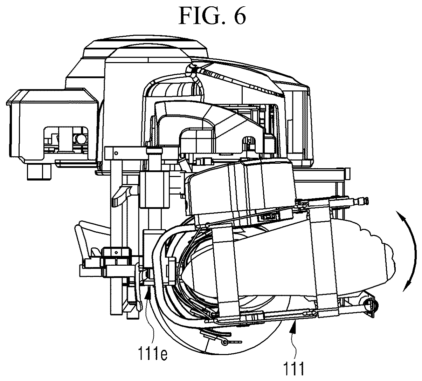

FIG. 6 is a bottom view illustrating a horizontal rotation part of the ankle joint according to an embodiment of the present invention.

Referring to FIG. 6, the motor driving part 111d may vertically rotate the foot fixing part 111b with respect to the ankle wear part 111a. That is, the motor driving part 111d may rotate the foot fixing part 111b in the medial/lateral (ML) axis (dorsal/plantar) direction (only) with respect to the ankle wear part 111a and may induce the plantar flexion and the dorsiflexion of the ankle joint.

In addition, the ankle joint unit 111 may further include a horizontal rotation part 111e for horizontally rotating the foot fixing part 111b with respect to the ankle wear part 111a. The horizontal rotation part 111e may horizontally rotate the foot fixing part 111b with respect to the ankle wear part 111a and may implement the adduction/abduction function of the ankle joint. The ankle joint's adduction/abduction function may be implemented in the ankle joint unit 111 through the horizontal rotation part 111e. Even in normal walking of an ordinary person, the walking may proceed in a state of the adduction/abduction due to habitual or genetic causes. In the case of patients, the walking pattern often deviates from normal, so the internal/external rotation may often be changed excessively. In order to enable appropriate walking training of the patient, it is possible to implement maximum adduction of approximately 12° and maximum abduction of approximately 19° to enable patient-tailored walking. For example, the structure of the horizontal rotation part 111e may be configured to use a method for fixing the rotation part by adjusting a cam lever with a one-touch function in a state in which the adduction/abduction are effectively performed to a desired position using a rotational oilless bush slide structure, and in this manner, the adduction/abduction function of the ankle joint may be implemented with minimal time and effort.

The control unit 140 may guide the gait of the walking trainee while matching the walking state of the walking trainee to the set walking pattern, compare the walking state of the current time point with the set walking pattern of the corresponding time point based on the set walking pattern, and correct the walking state of the walking trainee based on the difference to match the set walking pattern, and guide the gait of the walking trainee so that the walking trainee learns (or acquires) the set walking pattern.

For example, the set walking pattern may set an acceptable walking pattern for the walking trainee, and the physical condition (e.g., body size) of the walking trainee, information on the walking pattern acquired through the walking training or testing, information or commands that are necessary for driving and setting the joint movement robot 110, the treadmill 120 and/or the load compensation unit may be transmitted from a server of a network system or an information storage device of a controller, or input by manipulating an input terminal of an input unit of the controller.

Here, the information on the walking pattern acquired through the walking training or test may be generated through a walking pattern information generation process, and information (s) input or stored in the walking pattern information generation process may be output on a screen in real time in an appropriate form among numbers, tables, graphs or figures through the display part 151, and thus, the walking trainee and physical therapist may check an angle, a speed, and a contact state between torque and the ground at each joint of the walking trainee, which is currently being performed, in real time. In addition, if the information about the angle, the speed, the torque, and the traction amount of each joint input in real time during the walking pattern information generation process is output on a single screen together with the information about the angle, the speed, the torque, and the traction amount of each joint in a standard form suitable for the walking trainee in the information input process, the walking trainee and the physical therapist may clearly confirm and compare differences between the standard walking pattern suitable for the walking trainee and the currently performed walking by objective indicators, and analyze and determine whether the walking trainee is performing the walking training correctly and what walking pattern is more suitable for the walking trainee.

In this manner, in the present invention, the pressure of the walking trainee pressing the surface layer of the treadmill may be transmitted to the pressure-measuring plate to analyze the walking state of the walking trainee and guide the walking trainee's gait, thereby inducing the maintenance in balance of the ankle joint and the natural movement of the plantar flexion and the dorsiflexion according to the walking cycle of the walking trainee. In addition, the walking state output unit may receive the visual and/or auditory feedback on the walking state of the walking trainee according to the walking cycle of the walking trainee to recognize the current walking state and attempt the movements that is necessary to correct the walking state according to each walking cycle. In addition, the walking trainee may set the acceptable walking pattern and provide the movement according to the maintenance in balance of the ankle joint and the walking cycle of the plantar flexion and dorsiflexion along the moving path of the pressure center of the natural ground reaction force within the safe range. Therefore, the walking trainees may actively learn the natural gait.

Although preferred embodiments of the present invention have been described with reference to a number of illustrative embodiments thereof, the embodiments of the present invention are not limited to the foregoing embodiments, and thus, it should be understood that numerous other modifications and embodiments may be devised by those skilled in the art that will fall within the spirit and scope of the principles of this invention. Hence, the real protective scope of the present invention shall be determined by the technical scope of the accompanying claims.

## Claims

1. A walking training apparatus comprising:
a joint movement robot comprising an ankle joint unit provided to correspond to an ankle joint position of a walking trainee, and worn on a leg of the walking trainee;
a treadmill having a movable surface layer to provide a walking surface to the walking trainee;
a pressure-measuring plate comprising a plurality of pressure sensors arranged so that two or more pressure sensors are disposed within an area of a sole of a foot to measure a pressure of each portion of the sole of the walking trainee, and provided at a lower portion of the surface layer to measure a pressure applied to the surface layer by the sole; and
a control unit configured to receive the pressure measured by the pressure-measuring plate so as to analyze a walking state of the walking trainee, thereby guiding a gait of the walking trainee.

2. The walking training apparatus of claim 1, wherein the control unit is configured to analyze the walking state of the walking trainee by obtaining ground reaction force and a moving path of a pressure center according to a walking cycle of the walking trainee through a pressure of each portion of the sole of the walking trainee, which is received from the pressure-measuring plate.

3. The walking training apparatus of claim 2, wherein the ankle joint unit comprises:
an ankle wear part worn on the ankle of the walking trainee;
a foot fixing part fixed to the foot of the walking trainee;
a joint configured to rotatably connect corresponding to the ankle joint of the walking trainee the ankle wear part and the foot fixing part each other; and
a motor driving part configured to rotate the foot fixing part with respect to the ankle wear part about the joint.

4. The walking training apparatus of claim 3, wherein the control unit determines the walking cycle of the walking trainee to drive the motor driving part during a swing phase among a stance phase and the swing phase.

5. The walking training apparatus of claim 4, wherein the control unit adjusts rotational power of the motor driving part according to strength of the ground reaction force.

6. The walking training apparatus of claim 4, wherein the control unit determines the walking cycle of the walking trainee by using the ground reaction force and the moving path of the pressure center.

7. The walking training apparatus of claim 3, wherein the ankle joint unit further comprises a stopper configured to limit a rotational motion of the foot fixing part relative to the ankle wear part.

8. The walking training apparatus of claim 3, wherein the foot fixing part comprises:
a sole support part configured to support at least a portion of the sole of the foot of the walking trainee; and
a band part provided in a front of the sole support part to surround a portion of the foot of the walking trainee.

9. The walking training apparatus of claim 2, further comprising a walking state output unit configured to output the walking state of the walking trainee, which is analyzed by the control unit.

10. The walking training apparatus of claim 9, wherein the walking state output unit comprises a display part configured to display the ground reaction force and the moving path of the pressure center obtained from the control unit.

11. The walking training apparatus of claim 10, further comprising a camera unit configured to photograph a walking posture of the walking trainee walking on the treadmill,
wherein the control unit determines the walking cycle of the walking trainee through an image photographed by the camera unit.

12. The walking training apparatus of claim 11, wherein the display part further displays the image photographed by the camera unit.

13. The walking training apparatus of claim 10, further comprising a joint movement measuring unit configured to measure an angle and torque of each joint of the walking trainee,
wherein the display part further displays the angle and torque of each joint, which are measured by the joint movement measuring unit.

14. The walking training apparatus of claim 13, wherein the control unit determines the walking cycle of the trainee through the angle and torque of each joint.

15. The walking training apparatus of claim 10, wherein the walking state output unit further comprises a notification part configured to output sound or light at a specific time point in the walking cycle of the walking trainee.

16. The walking training apparatus of claim 15, wherein the notification part outputs the sound or light at an end point of the stance phase or a start point of the swing phase.

17. The walking training apparatus of claim 3, wherein the motor driving part vertically rotates the foot fixing part with respect to the ankle wear part, and
the ankle joint unit further comprises a horizontal rotation part for horizontally rotating the foot fixing part with respect to the ankle wear part.

18. The walking training apparatus of claim 1, wherein the control unit guides the gait of the walking trainee while matching the walking state of the walking trainee to a set walking pattern.
